Europäisches Patentamt

European Patent Office

Office européen des brevets

(19)

(11) **EP 0 505 223 B1**

(12) **FASCICULE DE BREVET EUROPEEN**

(45) Date de publication et mention
de la délivrance du brevet:
**02.04.1997 Bulletin 1997/14**

(51) Int Cl.6: **H04B 3/54**

(21) Numéro de dépôt: **92400433.6**

(22) Date de dépôt: **19.02.1992**

(54) **Dispositif de transmission d'informations numériques sur une ligne d'un réseau d'énergie électrique**

Vorrichtung zur digitalen Datenübertragung über eine Leitung des Stromnetzes

Apparatus for transmission of digital information on a line of a power distribution network

(84) Etats contractants désignés:
AT BE CH DE DK ES FR GB GR IT LI NL PT SE

(30) Priorité: **18.03.1991 FR 9103264**

(43) Date de publication de la demande:
**23.09.1992 Bulletin 1992/39**

(73) Titulaire: **SCHLUMBERGER INDUSTRIES**
**F-92120 Montrouge (FR)**

(72) Inventeurs:
- **Schwartz, Hervé**
  **F-92170 Vanves (FR)**
- **Muller, Marc**
  **F-92140 Clamart (FR)**

(74) Mandataire: **Bentz, Jean-Paul**
**SCHLUMBERGER INDUSTRIES**
**Propriété Intellectuelle**
**Groupe Electricité**
**B.P. 620-02**
**92542 Montrouge Cédex (FR)**

(56) Documents cités:
DE-A- 2 039 409        FR-A- 2 180 988
US-A- 4 479 215        US-A- 4 535 447

- **IEEE MILITARY COMMUNICATION CONFERENCE vol. 1, 19 Octobre 1987, WASHINGTON D.C. pages 87 - 93; DIFAZIO ET AL.: 'Communication System Design sing M'ari full and partial response Continuous Phase Modulation'**
- **IEEE TRANSACTIONS ON ELECTROMAGNETIC COMPATIBILITY. vol. EMC14, no. 4, 4 Novembre 1972, NEW YORK US pages 113 - 128; JENKS ET AL.: 'Use of Four-Level Phase Modulation for Digital Mobile Radio'**

**Description**

La présente invention concerne un dispositif de transmission d'informations numériques sur une ligne d'un réseau d'énergie électrique, comportant des moyens d'émission aptes à transmettre des informations dans plusieurs bandes de fréquence prédéterminées, et des moyens de réception aptes à recevoir des informations dans l'une quelconque de ces mêmes bandes.

Le dispositif selon l'invention se rattache donc à la famille des systèmes de transmission dits "CPL" (courant porteur en ligne), et peut notamment être appliqué à la concentration et au télérelevé de données de comptage d'énergie électrique, à la commande à distance d'un ensemble de disjoncteurs, à la transmission d'ordres ou d'informations en domotique, et plus généralement à l'automatisation d'un réseau de distribution électrique et de l'ensemble des charges ou organes qui s'y trouvent connectés.

L'invention est par ailleurs aussi bien utilisable sur les réseaux basse tension, c'est-à-dire dont la tension est typiquement de l'ordre de 100 à 400 volts, que sur les réseaux moyenne tension, c'est-à-dire dont la tension est typiquement comprise entre 3 et 35 kilovolts, la caractéristique commune étant que le canal de transmission d'informations utilisé est, dans tous les cas, constitué par une ligne d'un réseau de distribution d'énergie électrique.

Les problèmes rencontrés dans la mise au point des systèmes CPL sont multiples.

Tout d'abord, la transmission aux fréquences relativement basses, notamment en-dessous de 9 kHz, se heurte à la présence d'harmoniques de la fréquence fondamentale du réseau (généralement de 50 ou 60 Hz), qui rendent très difficile la détection des signaux transmis.

En pratique, une transmission aux basses fréquences, et a fortiori aux très basses fréquences, impose le recours à des injecteurs de forte puissance, donc nécessairement coûteux et d'encombrement très important.

Bien que la transmission à fréquence élevée permette de s'affranchir des interférences avec les harmoniques de la fréquence du réseau et de réduire considérablement la taille des injecteurs, elle se heurte en revanche à d'autres difficultés, à savoir d'une part une atténuation éventuellement importante du signal transmis, qui dépend du nombre et de la nature des appareils connectés à un même instant sur la ligne électrique, et la présence, sur la ligne électrique, de bruits impulsionnels dans la bande de fréquence utilisée pour la transmission.

A titre d'exemple, ces bruits impulsionnels, dans la plupart des systèmes classiques, font, à certains instants au moins, passer le rapport signal/bruit en-dessous de la valeur minimale de détection du signal, qui se situe généralement au voisinage de 5 dB.

Bien qu'il soit connu, pour toutes ces raisons, d'utiliser des systèmes à spectre étalé pour transmettre des informations sur les réseaux électriques, et bien que ces systèmes s'avèrent tout à fait satisfaisants dans certaines applications, ils présentent malgré tout l'inconvénient d'être généralement relativement complexes, et de distribuer en permanence l'énergie sur une bande de fréquence très large dont, le cas échéant, une partie importante peut n'offrir qu'un rapport signal/bruit très insuffisant pour concourir efficacement au succès de la transmission.

On connait par ailleurs, grâce au brevet US-A- 4 479 215, un dispositif conforme au préambule de la présente description, c'est-à-dire un système CPL qui utilise une modulation de fréquence sur une bande relativement étroite, choisie dans un ensemble de bandes de fréquences prédéterminées.

Bien qu'il devienne alors théoriquement possible de concentrer toute l'énergie de l'émission dans une bande efficace du point de vue de la transmission, le recours à une telle modulation fait elle-même apparaître un nouveau problème, à savoir celui du choix de cette bande et de son exploitation coordonnée par l'émetteur d'une part, et par le récepteur d'autre part.

Ce problème est résolu dans l'art antérieur, aussi bien dans le contexte technique de la transmission PLC, comme le montre le brevet US-A- 4 479 215 lui-même, que dans le contexte de la transmission radio pourtant marquée par des difficultés fondamentalement différentes, comme le montre le brevet allemand DE-A- 2 039 409, en basant la coordination de l'émetteur et du récepteur sur une connaissance a priori, par le premier et le second, de l'ordre dans lequel les différentes bandes de fréquence seront essayées.

Selon le brevet US-A- 4 479 215 par exemple, toute nouvelle transmission est faite sur une bande de fréquence prédéfinie connue de l'émetteur et du récepteur, et l'émetteur, à défaut de recevoir un accusé de réception de la part du récepteur, conclut à l'échec de la transmission; dans ce cas, il émet alors, en direction de tous ses récepteurs potentiels, un ordre de saut de fréquence, enjoignant à ces récepteurs de surveiller l'arrivée d'un message sur une second bande de fréquence, également prédéfinie et connue à l'avance de l'émetteur et des récepteurs.

Bien que des moyens particuliers soient prévus dans le brevet US-A- 4 479 215 pour augmenter la probabilité que les récepteurs détectent effectivement l'ordre de saut de fréquence, et soient donc en principe informés de ce que la bande à surveiller a changé, les problèmes associés à ce mode de fonctionnement sont triples : tout d'abord, la probabilité pour que le récepteur ne puisse pas détecter le signal de saut de fréquence dans toutes les conditions de transmission reste relativement élevée; par ailleurs la probabilité pour que le récepteur détecte un signal parasite et l'interprète comme un signal de saut de fréquence est encore plus élevée; enfin et surtout, la probabilité de détection du message par le récepteur est rigoureusement nulle dans chacune des deux éventualités précédentes, puisque le récepteur se trouve alors nécessairement calé sur une bande de fréquence différente de celle sur laquelle le message est émis.

Le brevet FR-A- 2 180 988 décrit un procédé pour transmettre des données en pacquets, chaque pacquet comprenant un mot de code au début du message pour faciliter la synchronisation de la phase du message dans le récepteur.

L'invention a pour but de proposer un dispositif de communication CPL capable de s'adapter à la transmission d'informations dans plusieurs bandes de fréquence, mais dont le processus d'adaptation ne repose pas sur une connaissance a priori, par l'émetteur et le récepteur, de l'ordre dans lequel les différentes bandes de fréquence seront exploitées, de manière à éviter les défaillances précédemment évoquées.

A cette fin, le dispositif de transmission d'informations selon l'invention est essentiellement caractérisé :

en ce que les moyens d'émission, au moins à l'établissement d'une nouvelle communication avec les moyens de réceptions, envoient des informations sous forme d'un message précédé d'un préambule de synchronisation, au moins le préambule de synchronisation étant envoyé dans chacune des bandes de fréquence, et

en ce que les moyens de réception comprennent : des moyens de conditionnement propres à traiter tout signal reçu dans toute bande de réception faisant partie desdites bandes de fréquence prédéterminées; des moyens d'adaptation pour choisir ladite bande de réception; des moyens de synchronisation aptes à retrouver une séquence prédéterminée contenue dans le préambule de synchronisation; et des moyens d'évaluation, opérant sous le contrôle des moyens de synchronisation, pour fournir aux moyens d'adaptation un critère d'évaluation de la transmission d'informations dans toute bande de réception choisie; les moyens d'adaptation utilisant ce critère pour choisir et retenir comme bande de réception du message une bande de réception qui offre une qualité de transmission suffisante.

Dans un mode de réalisation avantageux du dispositif, les moyens de conditionnement traitent le signal reçu dans une seule bande de réception à la fois, et les moyens d'adaptation, à défaut de recevoir un critère d'évaluation satisfaisant, changent périodiquement la bande de réception choisie, avec une périodicité au plus égale à la durée d'émission dudit préambule divisée par le nombre desdites bandes de fréquences prédéterminées.

Dans un dispositif conforme à l'invention et comportant au moins un premier et un second postes de communication dotés chacun de moyens d'émission et de moyens de réception, l'efficacitié de la transmission d'informations du premier poste vers le second est encore amélioré si le second poste comporte des moyens pour contrôler ses propres moyens d'émission en vue de transmettre au premier poste un accusé de réception indicatif de la bande retenue comme bande de réception du message.

Par exemple, le second poste utilise alors la bande retenue comme bande de réception du message pour transmettre cet accusé de réception au premier poste.

De préférence, les moyens d'émission intégrés au dispositif de l'invention utilisent une modulation par déplacement de fréquence à variation continue de phase (modulation CPFSK).

Par ailleurs, les moyens d'évaluation de qualité de transmission, s'ils mettent en oeuvre un algorithme de Viterbi construit sur un treillis de phases, comportent avantageusement des moyens de détection opérant une détection de type pseudo-cohérent.

Dans ce cas, les moyens de détection sont de préférence aptes à limiter le nombre d'informations enregistrées dans une mémoire dédiée à l'algorithme de Viterbi, afin d'éliminer d'éventuels problèmes de détection dus à une brusque variation de phase.

D'autre part, la valeur de l'index de modulation h, qui détermine le nombre maximum d'états du treillis de phase est avantageusement fixée à 0,75, et la modulation CPFSK utilisée est de préférence une modulation quaternaire.

Enfin, dans le cas où la périodicité des transmissions d'informations est faible par rapport aux périodes de stabilité du canal de transmission, les moyens d'émission et les moyens de réception peuvent être rendus aptes à mémoriser la dernière bande de fréquence retenue comme bande de réception, et à utiliser et surveiller prioritairement cette bande pour la communication suivante.

D'autres caractéristiques et avantages de l'invention ressortiront clairement de la description qui en est faite ci-après, à titre indicatif et nullement limitatif, en référence aux dessins dans lesquels :

-   Les figures 1A et 1B représentent un treillis de phases pour une modulation CPFSK respectivement binaire et quaternaire;

-   La figure 2 est une représentation fonctionnelle des cartes analogique et numérique d'émission/réception du dispositif;

- Les figures 3A, 3B, 3C et 3D représentent des échanges d'informations entre un premier et un second poste selon, respectivement, des premier, second, troisième et quatrième protocoles.

L'idée générale de l'invention consiste à utiliser une modulation à bande étroite et à adapter la bande de fréquence aux caractéristiques de transmission du canal que constitue la ligne électrique.

Les informations sont transmises par modulation CPFSK, c'est-à-dire grâce à une modulation par déplacement de fréquence à variation continue de phase, le principe de cette modulation consistant à coder et transmettre une information par la fréquence d'un signal sinusoïdal dont la phase varie de façon continue.

La modulation CPFSK utilisée dans le dispositif peut notamment être binaire ou quaternaire, c'est-à-dire permettre la transmission de symboles à deux états, ou "bits", codés par deux fréquences différentes, ou de symboles à quatre états, donc codés par quatre fréquences différentes.

Mathématiquement, cette modulation s'exprime sous la forme :

$$s(t) = A.\cos[F(t)+G],$$

pour t appartenant à l'intervalle [(n-1).T, n.T], avec :

A = racine carrée de $(2.E_s/T)$,
$F(t) = 2.PI.f_c.t + Alpha_n.PI.h. (t-(n-1).T)/T$,
$G = PI.h.Somme(Alpha_i$ pour i variant de moins l'infini à n-1),
où s(t) représente le signal transmis à tout instant t;
$f_c$ la fréquence du signal sinusoïdal transmis; T la durée constante des bits ou symboles transmis; $E_s$ l'énergie du symbole transmis, sur toute sa durée T; et où $Alpha_n$ est la valeur du symbole, $Alpha_n$ prenant les valeurs -1 et +1 pour une modulation CPFSK binaire, et les valeurs -3, -1, +1, et +3 pour une modulation quaternaire.

Comme le montre l'expression mathématique ci-dessus, la phase du signal transmis fait intervenir des termes $Alpha_i$, pour i inférieur à n, qui se rapportent à des symboles passés.

Bien que tout symbole à transmettre soit codé par la fréquence du signal émis, la phase de ce signal dépend donc des symboles précédents.

La détection préférablement effectuée selon l'invention, et qui sera ici définie comme "pseudo-cohérente", s'identifie totalement à la détection cohérente bien connue dont elle égale pratiquement les performances, et ne s'en distingue que par le fait qu'elle s'exempte de toute opération de récupération de phase.

En plus de sa grande simplicité de mise en oeuvre, cette détection pseudo-cohérente a l'avantage de fonctionner correctement même à bas rapport signal/bruit, cas où justement la récupération de phase est généralement difficile.

La modulation choisie est par ailleurs caractérisée, comme le montre l'expression de s(t), par le choix d'un index de modulation h représentant le taux de déviation fréquentielle et déterminant l'écart entre deux fréquences.

Pour un index de modulation h choisi et pour un nombre de phases donné à modulo 2.PI près, la trajectoire des phases possibles, à un instant précis, forme un treillis qui se développe sur un cylindre. Si h s'écrit h = p/q, avec p et q premiers entre eux et p impair, le treillis ne contient alors que 2.q états différents, les états suivants coïncidant, après un tour du cylindre, avec les premiers.

Chaque message, constitué par un ensemble de symboles, s'inscrit donc dans un treillis de ce type.

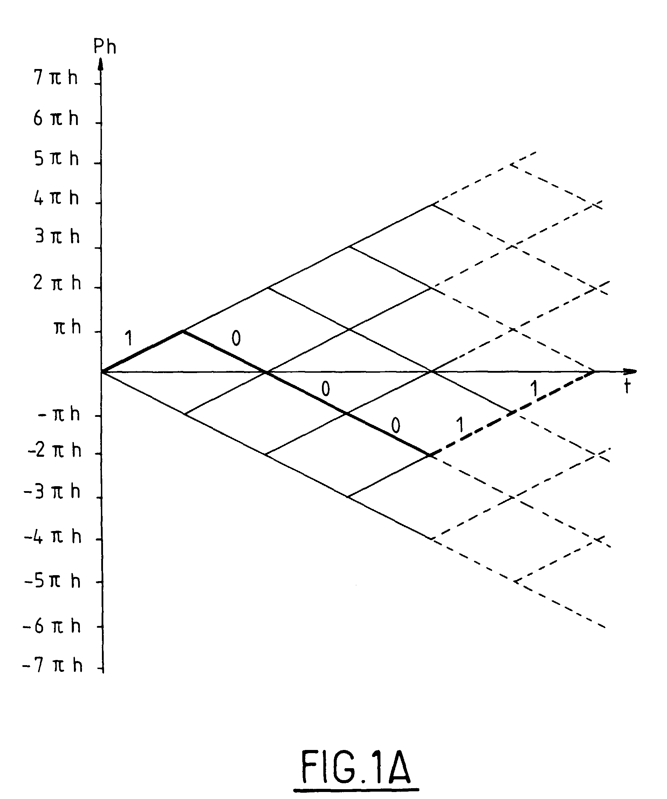

La figure 1A représente le treillis de phase et l'allure du signal émis pour une modulation CPFSK binaire. Le treillis est représenté sur un repère ayant pour abscisse le temps t et pour ordonnée la phase Ph exprimée en fonction de l'index de modulation h.

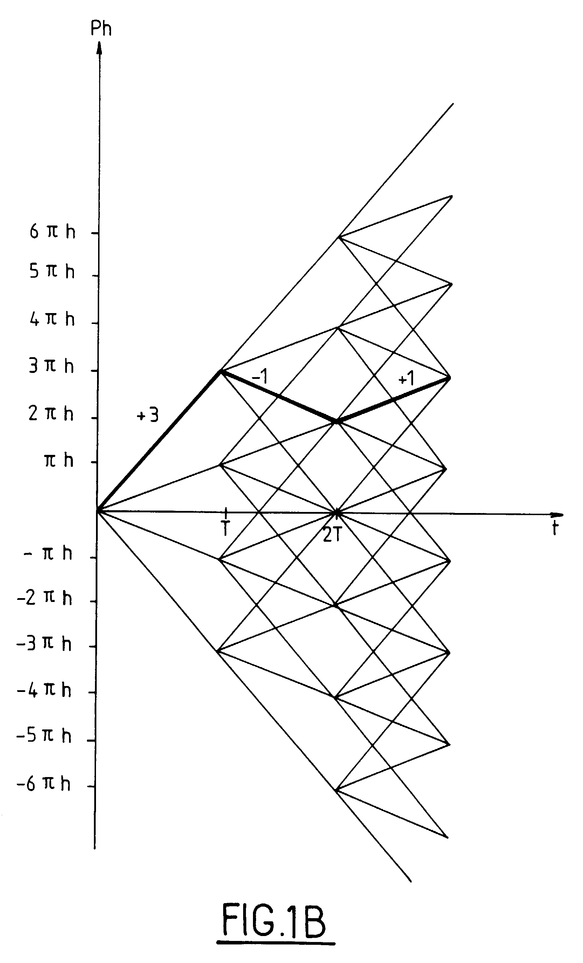

La figure 1B représente un autre treillis de phase, obtenu dans le cas d'une modulation CPFSK quaternaire. A chaque transition de symbole, quatre trajectoires, donc quatre valeurs pour le symbole suivant, sont a priori possibles.

En fait, une détection pseudo-cohérente ne peut être mise en oeuvre sans un choix particulier des paramètres du treillis de phase, et plus spécifiquement de l'index de modulation h.

En effet, bien que l'index de modulation h puisse a priori prendre plusieurs valeurs, il doit, pour un résultat optimum, respecter plusieurs contraintes, à savoir :

- avoir pour valeur un nombre rationnel, afin de conduire à un treillis dont le nombre d'états est fini;

- conduire à un treillis dont le nombre d'états est suffisamment grand pour que le déphasage entre la trajectoire réelle de phase et toute trajectoire possible soit faible, de sorte que la quantité d'énergie perdue en assimilant l'un à l'autre deux états voisins ne soit pas trop importante; et

- fournir des performances élevées en terme de probabilité d'erreur de décision, notamment supérieures à celles du PSK.

Une valeur performante de l'index de modulation est par exemple h = 3/4, c'est-à-dire h = 0,75, pour laquelle le treillis comporte huit états (2.q = 2 x 4 = 8).

Lorsque h n'est pas un nombre entier, comme c'est le cas dans l'application décrite, la détection porte non seulement sur l'état du signal à un instant donné, mais aussi sur les états antérieurs de ce signal.

Le message transmis est donc déterminé en fonction de la trajectoire de sa phase et la détection, de préférence réalisée par la mise en oeuvre de l'algorithme de Viterbi, consiste à retrouver la trajectoire de phase le plus probablement suivie à l'intérieur du treillis.

On sait en effet que l'algorithme de Viterbi, processus récurrent bien connu de l'homme de l'art, permet de réduire à 2.q le nombre des trajectoires de phases à prendre en compte parmi toutes les trajectoires possibles, et dont chacune représente une suite de symboles parmi toutes les suites possibles.

Ainsi, si l'on considère un treillis à huit états correspondant à un index de modulation h = 3/4, huit trajectoires seulement sont retenues par cet algorithme comme ayant une probabilité non nulle de correspondre à la trajectoire effectivement suivie par le message.

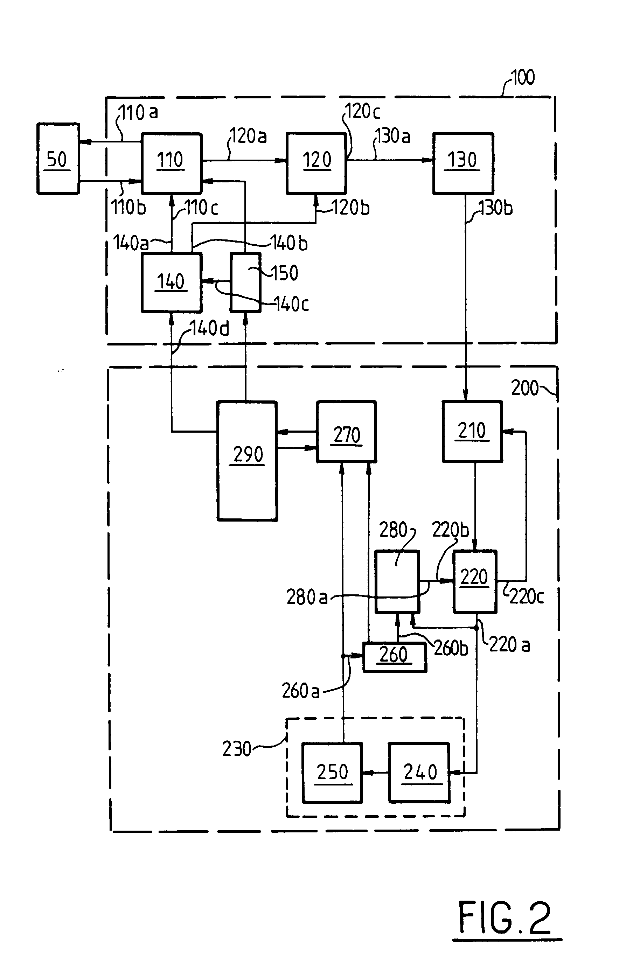

Ces huit trajectoires, appelées "survivants" sont mémorisées dans le dispositif de l'invention, dont la description structurelle sera faite en référence à la figure 2.

A la réception de chaque nouveau symbole, les survivants sont prolongés à partir de l'information disponible à la sortie des corrélateurs 220 représentés sur cette figure.

Plus précisément, les sorties de ces corrélateurs permettent de calculer des métriques de transition, c'est-à-dire de mesurer la probabilité d'une transition entre deux états de phase.

A partir de ces métriques de transition, l'algorithme de Viterbi détermine la probabilité d'une trajectoire et permet de choisir le plus favorable des survivants.

Il s'est avéré possible, dans le cadre de l'invention et notamment pour la détection pseudo-cohérente, d'améliorer la réception en limitant la mémoire de l'algorithme de Viterbi, autrement dit en oubliant le passé, soit de façon périodique, soit de façon progressive.

En effet, dans la mesure où la mise en oeuvre de l'algorithme de Viterbi introduit un effet de mémoire, tout changement de phase brusque et intempestif perturbe la détection pendant un certain temps.

L'oubli du passé permet donc de réduire les éventuelles erreurs de ce type et de limiter les éventuelles pertes d'information, tout changement de phase accidentel n'ayant plus alors de conséquence que sur une partie seulement de la trajectoire de phase.

Selon un mode de réalisation possible, l'oubli du passé est progressif et consiste, à l'arrivée de chaque nouveau symbole, à oublier le plus ancien symbole de chaque survivant après l'avoir pris en compte, c'est-à-dire dès que le plus ancien symbole de tous les survivants a été décidé en fonction des métriques calculées pour chacun des survivants.

Selon un autre mode de réalisation, le passé est oublié de façon périodique. Dans ce cas, le détecteur compare les métriques de chaque survivant à l'instant choisi pour vider la mémoire, et détermine alors la totalité des symboles du survivant le plus probable.

Pour interpréter correctement les messages qui se présentent à lui, le récepteur doit être capable d'une part de retrouver la bande de fréquence dans laquelle ils ont été émis, d'autre part de retrouver l'instant du début de chaque symbole, et enfin de retrouver l'instant du début du message utile qui lui est adressé.

Tout ceci est simplement obtenu, conformément à l'invention, à la fois par une combinaison fonctionnelle particulière du récepteur et par le fait que chaque message est précédé d'un préambule de synchronisation, qui contient une séquence prédéterminée, et grâce auquel le récepteur peut retrouver l'instant du début de chaque symbole, généralement dénommé "timing symbole".

La figure 2 représente, sous forme fonctionnelle, les cartes analogique 100 et numérique 200 d'émission et réception du dispositif de l'invention.

Le bloc 110 de couplage et de protection, caractéristique de tout système CPL, établit le lien physique entre le dispositif et la ligne 50 du réseau d'énergie électrique.

Plus précisément, le bloc 110 de couplage et de protection a pour fonction, à la réception, de transformer tout signal reçu de la ligne 50 sur l'entrée 110b en un signal utilisable par le dispositif et, à l'émission, de transformer un signal élaboré par le dispositif en un signal transitant par sa sortie 110a et susceptible de circuler sur la ligne 50.

Le bloc 120, dit "bloc de conditionnement" a quant à lui pour fonction de conditionner, autrement dit prétraiter, tout signal reçu sur son entrée 120a en provenance du bloc de couplage, ce conditionnement consistant en un filtrage, en une translation de fréquence de ce signal autour d'une fréquence intermédiaire grâce à un signal à la fréquence de translation reçu sur l'entrée 120b, et en une amplification du signal reçu.

Le signal disponible sur la sortie 120c du bloc 120 de conditionnement est délivré à l'entrée 130a d'un convertisseur analogique-numérique (CAN) 130 et les échantillons numériques disponibles sur la sortie 130b de ce convertisseur sont envoyés vers la carte numérique 200.

A l'émission, le générateur de signaux 140 émet un signal à transmettre sur sa sortie 140a à destination de l'entrée 110c du bloc 110 de couplage et de protection. A la réception, le générateur 140 émet sur sa sortie 140b le signal à la fréquence de translation appropriée, à destination de l'entrée 120b du bloc 120 de conditionnement. La sélection de mode de fonctionnement du générateur 140 est réalisée grâce à un interrupteur 150 lui-même piloté par un gestionnaire de communication 290 qui contrôle également le mode de fonctionnement du bloc 110 de couplage.

Les échantillons numériques provenant du CAN 130 sont stockés dans une mémoire vive (RAM) 210 avant d'être filtrés autour de deux fréquences de transmission F0 et F1 pour un schéma CPFSK binaire (et de 4 fréquences pour un schéma quaternaire), sous l'action d'un banc de quatre (ou de huit respectivement) corrélateurs 220.

A partir de ces quatre (ou huit) valeurs corrélées de F0 et F1, le bloc de décision de symboles 230, qui met en oeuvre l'algorithme de Viterbi, calcule, grâce au calculateur 240, les seize métriques de transition (ou trente deux pour un schéma quaternaire) dont le rôle a été expliqué plus en détail précédemment.

Les métriques issues du calculateur 240 sont envoyées au gestionnaire de survivants 250 qui délivre en sortie les symboles résultant de la décision, lesquels sont envoyés vers le correcteur d'erreurs 270 et vers le bloc 260 de synchronisation de trame pour synchroniser le poste récepteur sur l'information reçue.

Le correcteur d'erreurs 270 met en oeuvre n'importe quel algorithme de détection et de correction d'erreurs connu permettant de déterminer si les éventuelles erreurs de transmission sont ou ne sont pas corrigibles, et de les corriger si elles le sont.

Ce correcteur d'erreurs 270 est contrôlé par le gestionnaire de communication 290, qui active ou non l'algorithme de détection et de correction d'erreurs, et qui indique au correcteur d'erreurs la longueur du message attendu.

En mode non-actif, le correcteur 270 transmet au gestionnaire de communication 290 le message détecté sans correction, correspondant à la longueur indiquée. En mode actif, il transmet au gestionnaire de communication 290 le message corrigé ou l'informe que le message n'est pas corrigible, ce correcteur participant donc à l'évaluation de la transmission.

Le bloc 260 de synchronisation de trame reçoit, sur son entrée 260a, les symboles décidés, les stocke dans un registre à décalage et les corrèle, dans un premier temps, avec les symboles d'une séquence prédéterminée de récupération de timing (par exemple : 101010) contenu dans le préambule transmis par l'émetteur. Lorsque la corrélation dépasse un certain seuil, il envoie sur sa sortie 260b, à destination du bloc 280 de synchronisation de symboles, un signal indiquant le succès de la récupération de timing, c'est-à-dire de la détermination de l'instant de début des symboles reçus.

A la suite de cette récupération de timing, le bloc de synchronisation 260 corrèle les symboles décidés avec les symboles d'une seconde séquence prédéterminée de synchronisation, également contenue dans le préambule, définissant le début du message utile, et dite "séquence de synchronisation de trame". Dès que cette corrélation dépasse un certain seuil, l'importance de ce dépassement étant indicative de la qualité de la réception, un signal indiquant le succès et la qualité de la récupération de la trame est adressé au correcteur 270 par l'intermédiaire de la sortie 260c du bloc 260 de synchronisation de trame.

La production de ce signal, qui constitue donc un critère d'évaluation de la transmission finalement exploité par le gestionnaire 290, confère au bloc de synchronisation de trame 260 un rôle de moyen d'évaluation de la transmission, en plus de son rôle premier de moyen de synchronisation.

Le bloc 280 de synchronisation de symboles utilise, pour chaque symbole reçu, les sorties 220a des corrélateurs 220 pour calculer l'erreur de timing, qu'il communique par l'intermédiaire de sa sortie 280a à l'entrée 220b des corrélateurs 220.

Les corrélateurs 220 peuvent ainsi adapter, en fonction de cette erreur, l'adresse de l'information qu'ils requièrent de la mémoire 210 par l'intermédiaire de leur sortie 220c.

En mode émission, le gestionnaire de communication 290 formate les messages à transmettre en les encodant s'il s'agit de messages utiles et en les précédant de préambules de synchronisation comprenant des séquences de synchronisation de symboles et de trame.

Le gestionnaire de communication 290 choisit alors les deux (ou quatre, pour un schéma quaternaire) fréquences de représentation de l'information, qu'il indique à l'entrée 140d du générateur 140 suivant une séquence correspondant au message à transmettre.

Pour la transmission des messages, plusieurs protocoles d'échange peuvent être utilisés, ces protocoles étant implantés dans le gestionnaire de communication 290.

Les termes de "protocole", et en l'occurrence de "protocole adaptatif" dans le cas de l'invention, désignent l'ensemble des échanges de messages entre un émetteur et un récepteur pour aboutir à la transmission réussie d'un message utile. D'après l'invention, le canal de transmission entre l'émetteur et le récepteur est divisé en plusieurs bandes de fréquence.

Chaque poste émetteur/récepteur dispose d'au moins deux bandes de fréquence, le poste de réception devant, au cours d'une étape qui fait appel à ses propriétés d'adaptativité, retrouver la bande de fréquence choisie par le poste émetteur pour transmettre les messages.

De façon plus précise, il s'agit, pour chacun des postes intervenant dans la transmission, de déterminer et exploiter la meilleure bande de fréquence parmi toutes celles qui sont a priori disponibles, ou tout au moins une bande de fréquence utilisable, c'est-à-dire ne conduisant qu'à des erreurs en nombre suffisamment faible pour pouvoir être corrigées par le correcteur d'erreurs 270.

La détermination de la bande de fréquence à retenir pour la transmission des informations utiles, car permettant une transmission correcte des messages, peut se faire selon plusieurs protocoles différents d'échanges de messages entre l'émetteur et le récepteur.

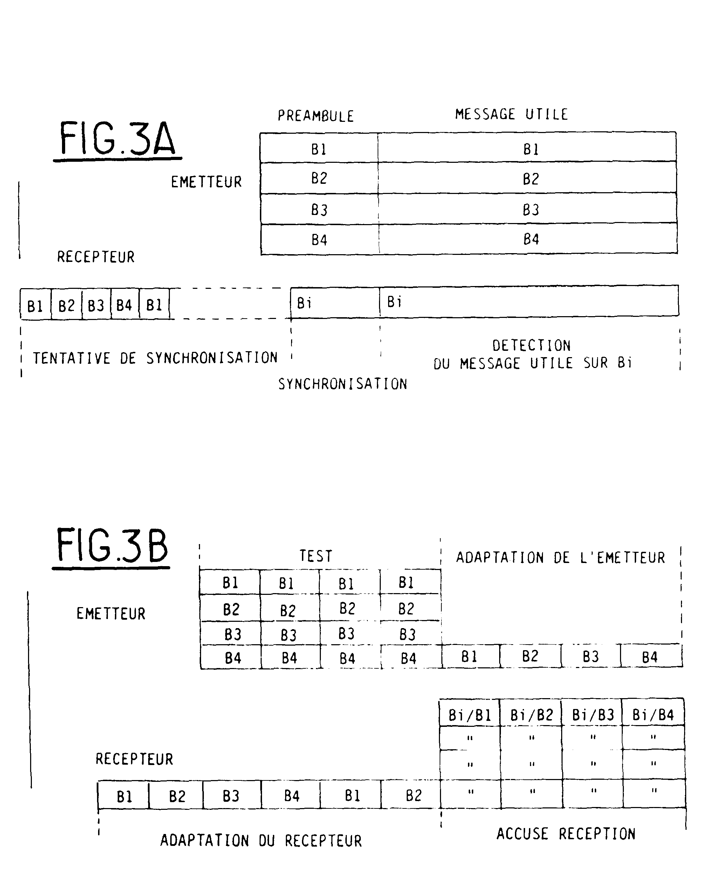

La figure 3A représente un échange d'informations entre l'émetteur et le récepteur selon un premier protocole. L'émetteur E envoie simultanément un même préambule sur chacune des bandes d'un ensemble de plusieurs bandes prédéterminées de fréquence, par exemple quatre bandes B1, B2, B3, B4. Le récepteur R, qui tente en permanence de se synchroniser sur les différentes bandes de fréquence qu'il choisit tour à tour, parvient finalement à se synchroniser sur l'une d'elles pendant la transmission de ce préambule. Lorsque l'envoi de ce dernier est terminé, l'émetteur envoie, à la suite du préambule, le message utile simultanément sur chacune des bandes de fréquences, le récepteur détectant alors le message utile sur la bande de fréquence sur laquelle il a réussi à se synchroniser.

Pour une transmission sur quatre bandes de fréquence différentes, un débit binaire brut de 1 000 bits/s et un message utile de 640 bits, ce protocole permet d'obtenir un débit binaire net de 925 bits/s, ce qui représente un excellent résultat. En contrepartie, ce protocole nécessite un partage de l'énergie d'émission disponible dans les différentes bandes de transmission, ses avantages majeurs étant donc sa qualité de transmission et la faible dégradation du débit brut qu'il entraîne.

La figure 3B illustre un échange d'informations selon un second protocole. L'émetteur envoie simultanément un même message test sur chacune des bandes de fréquence B1, B2, B3, B4 et répète cet envoi autant de fois qu'il y a de bandes afin que le récepteur ait l'occasion de pouvoir s'adapter à chacune des bandes tour à tour, d'évaluer pour chacune d'elles la qualité de la transmission, et de lui attribuer une note de qualité correspondante, celle-ci étant nulle pour une bande en cas de défaut de réception du message test sur cette bande, et prenant dans le cas contraire la valeur suivante :

$$\text{Note de qualité} = \text{Nombre d'erreurs fixé comme acceptable} -$$

$$\text{Nombre d'erreurs détectées sur le message test prédéterminé}$$

Le récepteur, utilisant cette note de qualité comme critère d'évaluation de la transmission, choisit alors la bande ayant la meilleure note de qualité et en communique le "numéro" $B_i$ à l'émetteur en envoyant, simultanément sur toutes les bandes de fréquence, un accusé de réception indiquant le numéro de cette bande. L'émetteur peut alors, en s'adaptant successivement aux différentes bandes de transmission, récupérer l'indication de la bande de fréquence retenue par le récepteur.

Pour des paramètres initiaux identiques au premier protocole, ce protocole permet un débit net de 600 bits/s et présente l'avantage de transmettre avec la meilleure qualité possible puisqu'il choisit la meilleure bande de transmission.

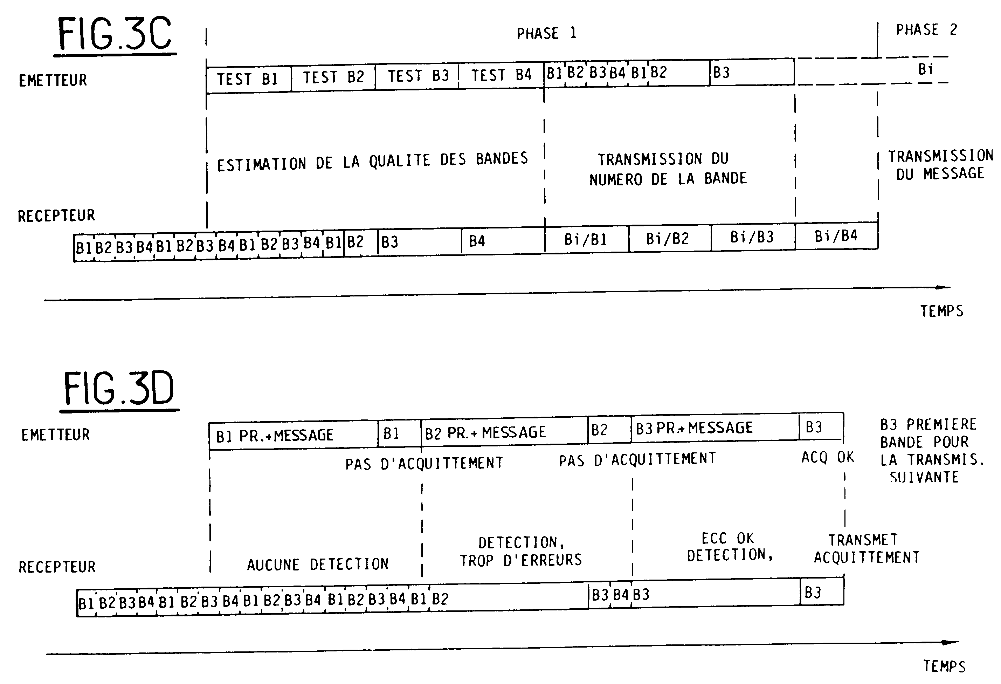

La figure 3C représente un échange entre l'émetteur E et le récepteur R selon un troisième protocole d'échange, qui utilise à nouveau des messages tests pour déterminer la bande de fréquence optimale. Dans l'exemple représenté sur la figure, la bande B1 est supposée de très mauvaise qualité, la bande B2 un peu meilleure, la bande B4 de bonne qualité et la bande B3 excellente. L'émetteur E envoie successivement sur chaque bande de fréquence Bj un même message test. Le récepteur R observe chaque bande successivement et tente de détecter le message test (test Bj), et de comptabiliser les éventuelles erreurs de transmission.

Chaque bande de fréquence ayant été observée, le récepteur R attribue une note de qualité à chacune d'elles, le défaut de réception du message test sur une bande conduisant à attribuer une note de qualité nulle à celle-ci. La note de qualité est utilisée comme critère de transmission, et la bande de fréquence ayant reçu la meilleure note de qualité est sélectionnée. Le récepteur R renvoie alors sur chaque bande Bj un accusé de réception donnant le numéro de la bande retenue pour la suite de la transmission.

Le récepteur R n'observant qu'une seule bande à la fois, l'envoi de chaque message test est répété autant de fois qu'il y a de bandes, ou le préambule de synchronisation de symboles est allongé d'un facteur égal au nombre de bandes, afin d'assurer que le récepteur a bien eu la possibilité d'observer chacune des bandes tour à tour. L'émetteur E, ayant reçu du récepteur R l'information identifiant la bande retenue, envoie alors les messages utiles vers le récepteur R qui les détecte et les interprète.

A chaque nouvelle transmission, le processus est recommencé.

Ainsi, pour une application utilisant quatre bandes de fréquence B1, B2, B3, B4, quatre messages tests (test B1, test B2, test B3, test B4) doivent être envoyés sur les quatre bandes, l'émission étant ainsi répétée seize fois. Le détecteur R observe successivement les quatre bandes et renvoie sur chacune d'elles une information Bi indiquant la bande qu'il a retenue, le message utile étant alors envoyé sur cette bande.

Bien que ce protocole d'échange soit d'une efficacité limitée car fortement dépendante de la longueur des messages tests, il a l'avantage d'être relativement simple. Avec les mêmes paramètres initiaux que dans les protocoles précédents, son débit net est de 410 bits par seconde.

La figure 3D illustre un quatrième protocole d'échange capable de déterminer, sinon la meilleure bande de fréquence, au moins une bande de transmission acceptable, les bandes B1, B2, B3 et B4 étant supposées de même qualité que celles données pour l'exemple de la figure 3C.

Ce protocole exploite totalement le fait qu'il suffit, pour assurer la transmission correcte du message, que le récepteur soit synchronisé sur le message reçu et que les éventuelles erreurs affectant le message utile soit en nombre tel qu'elles restent corrigibles.

L'émetteur E envoie au récepteur R le message utile précédé de son préambule de synchronisation, d'abord sur l'une quelconque des bandes de fréquence, puis successivement sur chacune des autres bandes de fréquence. Dès que le récepteur R détecte de façon satisfaisante le message utile sur l'une des bandes, il renvoie aussitôt à l'émetteur, sur cette même bande, un accusé de réception identifiant la bande de réception retenue.

Ce protocole présente l'avantage d'une grande simplicité de mise en oeuvre. De plus, il est possible de le perfectionner et d'accroître de façon significative le débit de communication qu'il permet en mémorisant, dans l'émetteur au moins, le numéro de la bande retenue par le récepteur et en utilisant celle-ci de façon prioritaire pour les transmissions suivantes, ce qui permet lors de ces dernières, au moins si les conditions de transmission n'ont pas changé, d'économiser le temps nécessaire pour retrouver la bande de transmission satisfaisante. Ainsi, pour une application utilisant quatre bandes de fréquence, la longueur de recherche de la bande adéquate varie entre la longueur du préambule et du message utile, auxquels s'ajoute l'accusé de réception, et le quadruple de cette longueur.

De cette façon, même si le temps de recherche d'une bande adéquate peut être plus long avec ce protocole qu'avec les autres protocoles, un temps considérable est épargné grâce à l'ordre de préférence donné aux différentes bandes pour les transmissions suivantes.

Ce protocole permet ainsi un débit net variant entre 870 bits par seconde et 217 bits par seconde.

Selon l'invention, il est par exemple possible de transmettre un message en utilisant des bandes de fréquence comprises dans la plage de 9 à 95 kHz et espacées, par exemple, d'un pas de 38 Hz.

## Revendications

1. Dispositif de transmission d'informations numériques sur une ligne d'un réseau d'énergie électrique comportant des moyens d'émission (100, 200) aptes à transmettre des informations dans plusieurs bandes de fréquence prédéterminées (Bi), et des moyens de réception (100, 200) aptes à recevoir des informations dans l'une quelconque de ces mêmes bandes, caractérisé :

   - en ce que les moyens d'émission, au moins à l'établissement d'une nouvelle communication avec les moyens de réception, envoient des informations sous forme d'un message précédé d'un préambule de synchronisation, au moins le préambule de synchronisation étant envoyé dans chacune des bandes de fréquence, et

   - en ce que les moyens de réception comprennent : des moyens de conditionnement (120, 140) propres à traiter tout signal reçu dans toute bande de réception faisant partie desdites bandes de fréquence prédéterminées; des moyens d'adaptation (290) pour choisir ladite bande de réception; des moyens de synchronisation (260, 280) aptes à retrouver une séquence prédéterminée contenue dans le préambule de synchronisation; et des moyens d'évaluation (230, 260, 270), opérant sous le contrôle des moyens de synchronisation, pour fournir aux moyens d'adaptation un critère d'évaluation de la transmission d'informations dans toute bande de réception choisie; les moyens d'adaptation utilisant ce critère pour choisir et retenir comme bande de réception du message une bande de réception qui offre une qualité de transmission suffisante.

2. Dispositif suivant la revendication 1, caractérisé en ce que les moyens de conditionnement traitent le signal reçu dans une seule bande de réception à la fois, et en ce que les moyens d'adaptation, à défaut de recevoir un critère d'évaluation satisfaisant, changent périodiquement la bande de réception choisie, avec une périodicité au plus égale à la durée d'émission dudit préambule divisée par le nombre desdites bandes de fréquences prédéterminées.

3. Dispositif selon la revendication 1 ou 2, comportant au moins un premier poste de communication au moins doté desdits moyens d'émission et un second poste de communication au moins doté desdits moyens de réception, caractérisé en ce que le second poste comporte lui aussi des moyens d'émission, ainsi que des moyens pour contrôler ces derniers en vue de transmettre au premier poste un accusé de réception indicatif de la bande retenue comme bande de réception du message.

4. Dispositif selon la revendication 3, caractérisé en ce que le second poste utilise la bande retenue comme bande de réception du message pour transmettre ledit accusé de réception au premier poste.

5. Dispositif selon l'une quelconque des revendications précédentes, caractérisé en ce que les moyens d'émission comportent des moyens (220) pour effectuer une modulation par déplacement de fréquence à variation continue de phase appelée modulation CPFSK.

6. Dispositif selon l'une quelconque des revendications précédentes, mettant en oeuvre un algorithme de Viterbi construit sur un treillis de phases, caractérisé en ce que les moyens d'évaluation de qualité de transmission comportent en outre des moyens de détection opérant une détection de type pseudo-cohérent.

7. Dispositif selon la revendication 6, caractérisé en ce que les moyens de détection sont aptes à limiter le nombre d'informations enregistrées dans une mémoire dédiée à l'algorithme de Viterbi, afin d'éliminer d'éventuels problèmes de détection dus à une brusque variation de phase.

8. Dispositif selon la revendication 7, dans lequel les moyens de détection utilisent un index de modulation h déterminant un nombre maximum d'états du treillis de phase, caractérisé en ce que la valeur de cet index de modulation h est fixée à 0,75.

9. Dispositif selon l'une quelconque des revendications 5 à 8, caractérisé en ce que la modulation CPFSK est une modulation quaternaire.

10. Dispositif selon l'une quelconque des revendications précédentes, caractérisé en ce qu'au moins les moyens d'émission sont aptes à mémoriser la dernière bande de fréquence retenue comme bande de réception, et à utiliser prioritairement cette bande pour la communication suivante avec les moyens de réception.

**Patentansprüche**

1. Vorrichtung für die Übertragung digitaler Informationen auf einer Leitung eines Starkstromnetzes, mit Sendemitteln (100, 200), die geeignet sind, Informationen in mehreren vorgegebenen Frequenzbändern (Bi) zu senden, und Empfangsmitteln (100, 200), die geeignet sind, Informationen in einem beliebigen dieser Bänder zu empfangen, dadurch gekennzeichnet,

   - daß die Sendemittel wenigstens beim Aufbauen einer neuen Nachrichtenverbindung mit den Empfangsmitteln Informationen in Form einer Nachricht schicken, der ein Synchronisationsvorsatz vorhergeht, wobei wenigstens der Synchronisationsvorsatz in jedem der Frequenzbänder geschickt wird, und

   - daß die Empfangsmittel enthalten: Aufbereitungsmittel (120, 140), die jedes Signal verarbeiten können, das in jedem Empfangsband empfangen wird, das zu den vorgegebenen Frequenzbändern gehört; Anpassungsmittel (290) für die Wahl des Empfangsbandes; Synchronisationsmittel (260, 280), die eine im Synchronisationsvorsatz enthaltene vorgegebene Folge wiederauffinden können; und Auswertungsmittel (230, 260, 270), die unter der Steuerung der Synchronisationsmittel arbeiten, um an die Anpassungsmittel ein Auswertungskriterium für die Übertragung von Informationen in jedem ausgewählten Empfangsband zu liefern; wobei die Anpassungsmittel dieses Kriterium verwenden, um als Empfangsband der Nachricht ein Empfangsband auszuwählen und festzuhalten, das eine ausreichende Übertragungsqualität bietet.

2. Vorrichtung nach Anspruch 1, dadurch gekennzeichnet, daß die Aufbereitungsmittel das in einem einzigen Empfangsband empfangene Signal auf einmal verarbeiten und daß die Anpassungsmittel mangels eines Empfangs eines zufriedenstellenden Auswertungskriteriums das ausgewählte Empfangsband periodisch wechseln, mit einer Periodizität, die höchstens gleich der Sendedauer des Vorsatzes, dividiert durch die Anzahl der vorgegebenen Frequenzbänder, ist.

3. Vorrichtung nach Anspruch 1 oder 2, die wenigstens. eine erste Nachrichtenverbindungsstation, die mit den Sendemitteln versehen ist, sowie eine zweite Nachrichtenverbindungsstation, die wenigstens mit den Empfangsmitteln versehen ist, enthält, dadurch gekennzeichnet, daß die zweite Station ebenfalls Sendemittel sowie Mittel zum Steuern dieser letzteren enthält, damit diese an die erste Station eine Empfangsbestätigung senden, die das als Empfangsband für die Nachricht festgehaltene Band angibt.

4. Vorrichtung nach Anspruch 3, dadurch gekennzeichnet, daß die zweite Station das festgehaltene Band als Empfangsband für die Nachricht verwendet, um die Empfangsbestätigung zur ersten Station zu senden.

5. Vorrichtung nach irgendeinem der vorangehenden Ansprüche, dadurch gekennzeichnet, daß die Sendemittel Mittel enthalten(220) zum Ausführen einer Modulation durch Verschieben der Frequenz mit kontinuierlicher Phasenänderung, die CPFSK-Modulation genannt wird.

6. Vorrichtung nach irgendeinem der vorangehenden Ansprüche, die einen Viterbi-Algorithmus ausführt, der in einem Phasengitter konstruiert ist, dadurch gekennzeichnet, daß die Mittel für die Auswertung der Qualität der Übertragung außerdem Erfassungsmittel enthalten, die eine Erfassung des pseudokohärenten Typs ausführen.

7. Vorrichtung nach Anspruch 6, dadurch gekennzeichnet, daß die Erfassungsmittel geeignet sind, die Anzahl von in einem für den Viterbi-Algorithmus vorgesehenen Speicher eingetragenen Informationen zu begrenzen, um eventuelle Probleme bei der Erfassung aufgrund einer plötzlichen Phasenänderung zu beseitigen.

8. Vorrichtung nach Anspruch 7, in der die Erfassungsmittel einen Modulationsindex h verwenden, der eine maximale Anzahl von Zuständen des Phasengitters bestimmt, dadurch gekennzeichnet, daß der Wert dieses Modulationsindexes h auf 0,75 festgelegt ist.

9. Vorrichtung nach irgendeinem der Ansprüche 5 bis 8, dadurch gekennzeichnet, daß die CPFSK-Modulation eine Quartärmodulation ist.

10. Vorrichtung nach irgendeinem der vorangehenden Ansprüche, dadurch gekennzeichnet, daß wenigstens die Sendemittel geeignet sind, das letzte als Empfangsband festgehaltene Frequenzband zu speichern und mit Priorität dieses Band für die folgende Nachrichtenverbindung mit den Empfangsmitteln zu verwenden.


## Claims

1. A system for transmitting digital data over a line in an electricity power network, the system comprising transmitter means (100, 200) suitable for transmitting data over a plurality of predetermined frequency bands (Bi), and receiver means (100, 200) suitable for receiving data in any one of said bands, the system being characterized:

   in that the transmitter means, at least when setting up a new call with the receiver means, transmit data in the form of a message preceded by a synchronizing preamble, with at least the synchronizing preamble being transmitted over each of the frequency bands; and
   in that the receiver means comprise: preprocessor means (120, 140) suitable for processing any signal received from any of the reception bands included within said predetermined frequency bands; adaptation means (290) for selecting said reception band; synchronizing means (260, 280) suitable for finding a predetermined sequence contained in the synchronizing preamble; and evaluation means (230, 260, 270) operating under the control of the synchronizing means to provide the adaptation means with a criterion for evaluating the transmission of data in any selected reception band; the adaptation means using said criterion to select and designate as the message reception band a reception band that offers adequate transmission quality.

2. A system according to claim 1, characterized in that the preprocessor means process the signal received in a single reception band at a time, and in that the adaptation means, so long as they do not receive a satisfactory evaluation criterion, periodically change the selected reception band with a periodicity that is not greater than the transmission duration of said preamble divided by the number of said predetermined frequency bands.

3. A device according to claim 1 or 2, including at least a first communications station provided at least with said transmission means, and at least a second communications station provided with at least said receiver means, the system being characterized in that said second station also includes transmitter means, and means for controlling the transmitter means to transmit an acknowledgement to the first station specifying which band has been designated as the message reception band.

4. A system according to claim 3, characterized in that the second station uses the band designated as the message reception band for transmitting said acknowledgement to the first station.

5. A system according to any preceding claim, characterized in that the transmitter means include means (220) for performing continuous phase frequency shift keying known as CPFSK.

6. A system according to any preceding claim, implementing a Viterbi algorithm constructed on a phase lattice, the system being characterized in that the means for evaluating transmission quality further include detector means using pseudo-coherent type detection.

7. A system according to claim 6, characterized in that said detector means are suitable for limiting the amount of data stored in a memory dedicated to the Viterbi algorithm so as to eliminate possible detection problems due to a sudden change in phase.

8. A system according to claim 7, in which the detector means use a modulation index $h$ that determines a maximum number of states in the phase lattice, the system being characterized in that the value of said modulation index $h$ is fixed at 0.75.

9. A system according to any one of claims 5 to 8, characterized in that the CPFSK is quarternary keying.

10. A system according to any preceding claim, characterized in that at least the transmitter means are suitable for storing the most recent frequency band to be designated as the reception band, and for giving priority to said band for the following call to the receiver means.

## FIG.1A

FIG.1B

FIG.2

14

## FIG.3A

PREAMBULE          MESSAGE UTILE

EMETTEUR

| PREAMBULE | MESSAGE UTILE |
|-----------|---------------|
| B1 | B1 |
| B2 | B2 |
| B3 | B3 |
| B4 | B4 |

RECEPTEUR

| B1 | B2 | B3 | B4 | B1 | | Bi | Bi | |
|----|----|----|----|----|--|----|----|--|

TENTATIVE DE SYNCHRONISATION

SYNCHRONISATION

DETECTION
DU MESSAGE UTILE SUR Bi

## FIG.3B

TEST          ADAPTATION DE L'EMETTEUR

EMETTEUR

| B1 | B1 | B1 | B1 | | | | |
|----|----|----|----|--|--|--|--|
| B2 | B2 | B2 | B2 | | | | |
| B3 | B3 | B3 | B3 | | | | |
| B4 | B4 | B4 | B4 | B1 | B2 | B3 | B4 |

| Bi/B1 | Bi/B2 | Bi/B3 | Bi/B4 |
|-------|-------|-------|-------|
| " | " | " | " |
| " | " | " | " |
| " | " | " | " |

RECEPTEUR

| B1 | B2 | B3 | B4 | B1 | B2 |
|----|----|----|----|----|----|

ADAPTATION DU RECEPTEUR

ACCUSE RECEPTION

15

# FIG.3C

EP 0 505 223 B1

|  | PHASE 1 | PHASE 2 |
|---|---|---|

**EMETTEUR**

| TEST B1 | TEST B2 | TEST B3 | TEST B4 | B1 B2 B3 B4 B1 B2 | B3 | | Bi |
|---|---|---|---|---|---|---|---|

ESTIMATION DE LA QUALITE DES BANDES | TRANSMISSION DU NUMERO DE LA BANDE | TRANSMISSION DU MESSAGE

**RECEPTEUR**

| B1 B2 B3 B4 B1 B2 B3 B4 B1 B2 B3 B4 B1 | B2 | B3 | B4 | Bi/B1 | Bi/B2 | Bi/B3 | Bi/B4 |
|---|---|---|---|---|---|---|---|

TEMPS

# FIG.3D

**EMETTEUR**

| B1 PR.+MESSAGE | B1 | B2 PR.+MESSAGE | B2 | B3 PR.+MESSAGE | B3 |
|---|---|---|---|---|---|

B3 PREMIERE BANDE POUR LA TRANSMIS. SUIVANTE

PAS D'ACQUITTEMENT          PAS D'ACQUITTEMENT          ACQ OK

DETECTION, TROP D'ERREURS | ECC OK DETECTION, | TRANSMET ACQUITTEMENT

**RECEPTEUR**

AUCUNE DETECTION

| B1 B2 B3 B4 B1 B2 B3 B4 B1 B2 B3 B4 B1 B2 B3 B4 B1 B2 | B3 B4 B3 | B3 |
|---|---|---|

TEMPS